# EUROPÄISCHE PATENTSCHRIFT

(11) **EP 1 337 745 B1**
(45) Veröffentlichungstag und Bekanntmachung des Hinweises auf die Patenterteilung: **02.11.2005**
(21) Anmeldenummer: 01993749.9
(22) Anmeldetag: 25.10.2001
(51) Int. Cl.: F01N 11/00, B01D 53/94, F01N 9/00

(54) **VERFAHREN UND VORRICHTUNG ZUR STEUERUNG EINES ABGASNACHBEHANDLUNGSSYSTEMS**
METHOD AND DEVICE FOR CONTROLLING AN EXHAUST GAS AFTERTREATMENT SYSTEM
PROCEDE ET DISPOSITIF DE COMMANDE D'UN MOTEUR A COMBUSTION INTERNE AVEC UN SYSTEME DE TRAITEMENT SUBSEQUENT DES GAZ D'ECHAPPEMENT

(30) Priorität: 11.11.2000 DE 10056015
(43) Veröffentlichungstag der Anmeldung: 27.08.2003
(73) Patentinhaber: ROBERT BOSCH GMBH, 70442 Stuttgart (DE)
(72) Erfinder: STROHMAIER, Rainer, 70563 Stuttgart (DE); ZIMMERMANN, Stefan, 76327 Pfinztal (DE); BAUER, Martin, 76227 Karlsruhe (DE)
(86) Internationale Anmeldenummer: PCT/DE2001/004047
(87) Internationale Veröffentlichungsnummer: WO 2002/038923

(56) Entgegenhaltungen:
- DE-A- 19 823 921
- US-A- 5 743 084

## Beschreibung

### Stand der Technik

Die Erfindung betrifft ein Verfahren und eine Vorrichtung zur Fehlererkennung eines Abgasnachbehandlungssystems, insbesondere einer Brennkraftmaschine, gemäß den Oberbegriffen der unabhängigen Ansprüche.

Ein Verfahren und eine Vorrichtung zur Steuerung einer Brennkraftmaschine mit einem Abgasnachbehandlungssystem sind aus der DE 199 06 287 bekannt. Dort beinhaltet das Abgasnachbehandlungssystem einen Partikelfilter, der insbesondere bei direkteinspritzenden Brennkraftmaschinen eingesetzt wird. Als Zustandsgröße wird die Beladung des Partikelfilters erfasst. Beim Überschreiten bestimmter Werte leitet die Einrichtung einen Sonderbetriebszustand ein, bei dem der Partikelfilter durch geeignete Maßnahmen regeneriert wird.

Zur Erfassung des Beladungszustands wird häufig der Differenzdruck, d. h. die Druckdifferenz zwischen Eingang und Ausgang des Filters, ausgewertet. Bei einer Beschädigung des Partikelfilters, beispielsweise wenn eine Riss vorliegt, kann der Beladungszustand des Filters über den Differenzdruck nicht mehr sicher erkannt werden, da ein Teil des Abgases durch den Riss strömt. Darüber hinaus würden Partikel in die Umgebung gelangen, was zur Überschreitung von Emissionsgrenzwerten führen kann.

### Vorteile der Erfindung

Dadurch, dass in einem zweiten Betriebszustand, in dem der Partikelfilter regeneriert wird, ausgehend von zweiten Betriebskenngrößen eine zweite Größe, die die Menge an Stoffen charakterisiert, die aus dem Abgasnachbehandlungssystem entnommenen werden, ermittelt wird, und diese Größe mit der ersten Größe verglichen wird, die die Menge der dem Abgasnachbehandlungssystem zugeführten Stoffen charakterisiert, ist eine einfache und sichere Überwachung des Abgasnachbehandlungssystem möglich. Dabei wird vorzugsweise auf Fehler erkannt, wenn die beiden Größen wesentlich voneinander abweichen.

Bevorzugt wird die Vorgehensweise bei Partikelfiltern verwendet, wobei die Partikelmenge, die sich im Normalbetrieb im Partiklefilter ansammelt, mit der Partikelmenge verglichen wird, die während der Regeneration verbrennt.

Besonders einfach und sicher lässt sich die Menge an entnommenen Stoffen durch Auswerten der Temperatur vor und nach dem Partikelfilter bestimmen. Während der Regeneration des Partikelfilters führt die Reaktion der Partikel zu einer Temperaturerhöhung, die mittels Sensoren vor und nach dem Sensor relativ leicht erfasst werden kann. Ausgehend von dem Vergleich dieser beiden Größen kann sicher ein Defekt des Filters erkannt werden.

Als zweite besonders vorteilhafte Größe hat sich ein Signal herausgestellt, dass die Sauerstoffmenge im Abgas charakterisiert. Hierzu wird der Sauerstoffgehalt im Abgas vor und nach dem Filter erfasst. Aus der Masse des umgesetzten Sauerstoffs wird auf die regenerierte Partikelmenge geschlossen.

### Zeichnung

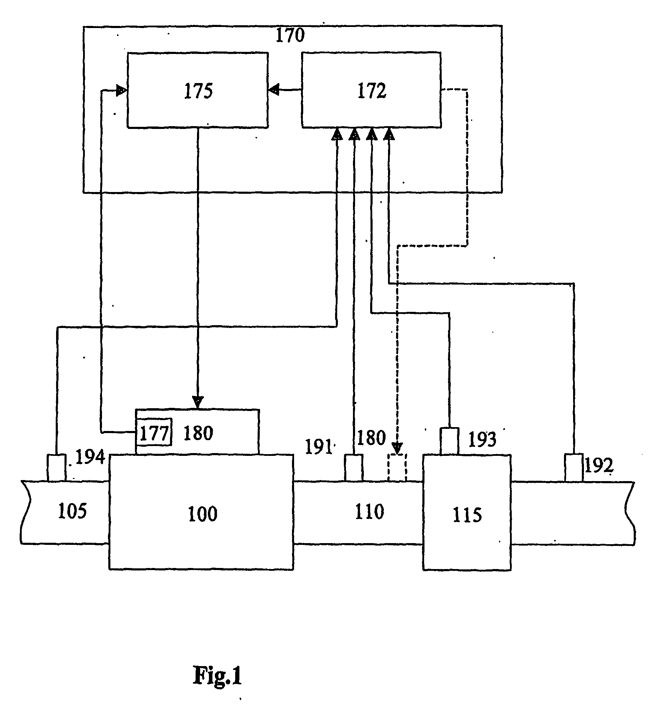

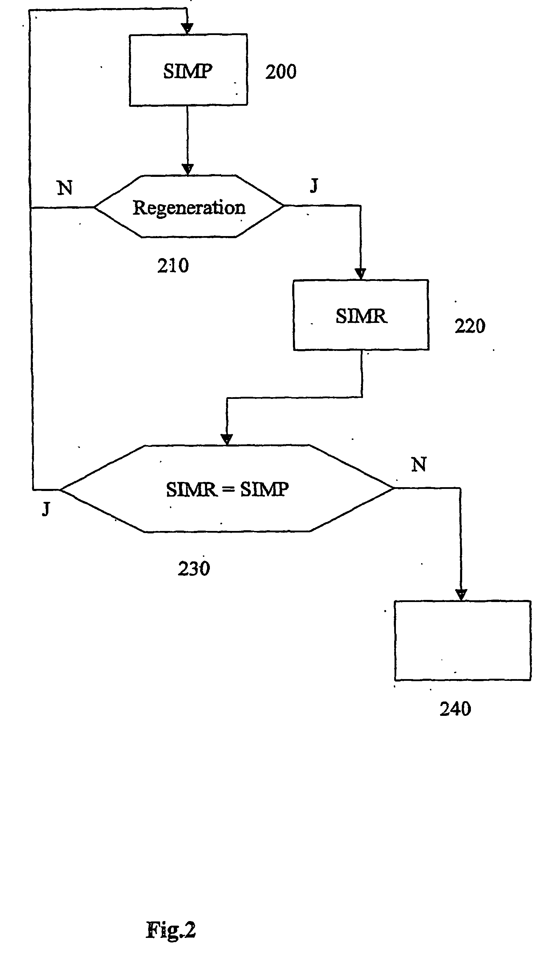

Die Erfindung wird nachstehend anhand der in der Zeichnung dargestellten Ausführungsformen erläutert. Es zeigen Figur 1 ein Blockdiagramm der erfindungsgemäßen Steuerung und Figur 2 ein Flussdiagramm zur Verdeutlichung der erfindungsgemäßen Vorgehensweise..

### Beschreibung der Ausführungsbeispiele

In Figur 1 sind die wesentlichen Elemente eines Abgasnachbehandlungssystems einer Brennkraftmaschine dargestellt. Die Brennkraftmaschine ist mit 100 bezeichnet. Ihr wird über eine Frischluftleitung 105 Frischluft zugeführt. Die Abgase der Brennkraftmaschine 100 gelangen über eine Abgasleitung 110 in die Umgebung. In der Abgasleitung ist ein Abgasnachbehandlungssystem 115 angeordnet. Hierbei kann es sich um einen Katalysator und/oder um einen Partikelfilter handeln. Desweiteren ist es möglich, dass mehrere Katalysatoren für unterschiedliche Schadstoffe oder Kombinationen von wenigstens einem Katalysator und einem Partikelfilter vorgesehen sind.

Desweiteren ist eine Steuereinheit 170 vorgesehen, die wenigstens eine Motorsteuereinheit 175 und eine Abgasnachbehandlungssteuereinheit 172 umfaßt. Die Motorsteuereinheit 175 beaufschlagt ein Kraftstoffzumesssystem 180 mit Ansteuersignalen. Die Abgasnachbehandlungssteuereinheit 172 beaufschlagt die Motorsteuereinheit 175 und bei einer Ausgestaltung ein Stellelement 182, das in der Abgasleitung vor dem Abgasnachbehandlungssystem oder im Abgasnachbehandlungssystem angeordnet ist, mit Ansteuersignalen.

Desweiteren sind verschiedene Sensoren vorgesehen, die die Abgasnachbehandlungssteuereinheit und die Motorsteuereinheit mit Signalen versorgen. So ist wenigstens ein erster Sensor 194 vorgesehen, der Signale liefert, die den Zustand der Luft charakterisiert, die der Brennkraftmaschine zugeführt wird. Ein zweiter Sensor 177 liefert Signale, die den Zustand des Kraftstoffzumesssystems 180 charakterisieren. Wenigsten ein dritter Sensor 191 liefert Signale, die den Zustand des Abgases vor dem Abgasnachbehandlungssystem charakterisieren. Wenigstens ein vierter Sensor 193 liefert Signale, die den Zustand des Abgasnachbehandlungssystems 115 charakterisieren. Desweiteren liefert wenigstens ein Sensor 192 Signale, die den Zustand der Abgase nach dem Abgasnachbehandlungssystem charakterisiert. Vorzugsweise werden Sensoren, die Temperaturwerte und/oder Druckwerte erfassen verwendet. Desweiteren können auch Sensoren eingesetzt werden, die die chemische Zusammensetzungen des Abgases und/oder der Frischluft charakterisieren. Hierbei handelt es sich bspw. um Lambdasensoren, NOX-Sensoren oder HC-Sensoren.

Mit den Ausgangssignalen des ersten Sensors 194, des dritten Sensors 191, des vierten Sensors 193 und des fünften Sensors 192 wird vorzugsweise die Abgasnachbehandlungssteuereinheit 172 beaufschlagt. Mit den Ausgangssignalen des zweiten Sensors 177 wird vorzugsweise die Motorsteuereinheit 175 beaufschlagt. Es können auch weitere nicht dargestellte Sensoren vorgesehen sein, die ein Signal bezüglich des Fahrerwunsches oder weitere Umgebungs- oder Motorbetriebszustände charakterisieren.

Besonders vorteilhaft ist es, wenn die Motorsteuereinheit und die Abgasnachbehandlungssteuereinheit eine bauliche Einheit bilden. Es kann aber auch vorgesehen sein, dass diese als zwei Steuereinheiten ausgebildet sind, die räumlich voneinander getrennt sind.

Im folgenden wird die erfindungsgemäße Vorgehensweise am Beispiel eines Partikelfilters, der insbesondere bei direkteinspritzenden Brennkraftmaschinen verwendet wird, beschrieben. Die erfindungsgemäße Vorgehensweise ist aber nicht auf diese Anwendung beschränkt, sie kann auch bei anderen Brennkraftmaschinen mit einem Abgasnachbehandlungssystem eingesetzt werden. Insbesondere kann sie eingesetzt werden, bei Abgasnachbehandlungssystemen, bei denen ein Katalysator und ein Partikelfilter kombiniert sind. Desweiteren ist sie einsetzbar, bei Systemen die lediglich mit einem Katalysator ausgestattet sind.

Ausgehend von den vorliegenden Sensorsignalen berechnet die Motorsteuerung 175 Ansteuersignale zur Beaufschlagung des Kraftstoffzumesssystems 180. Dieses mißt dann die entsprechende Kraftstoffmenge der Brennkraftmaschine 100 zu. Bei der Verbrennung können im Abgas Partikel entstehen. Diese werden von dem Partikelfilter im Abgasnachbehandlungssystem 115 aufgenommen. Im Laufe des Betriebs sammneln sich in dem Partikelfilter 115 entsprechende Mengen von Partikeln an. Dies führt zu einer Beeinträchtigung der Funktionsweise des Partikelfilters und/oder der Brennkraftmaschine. Deshalb ist vorgesehen, dass in bestimmten Abständen bzw. wenn der Partikelfilter einen bestimmten Beladungszustand erreicht hat, ein Regenerationsvorgang eingeleitet wird. Diese Regeneration kann auch als Sonderbetrieb bezeichnet werden.

Der Beladungszustand wird bspw. anhand verschiedener Sensorsignale erkannt. So kann zum einen der Differenzdruck zwischen dem Eingang und dem Ausgang des Partikelfilters 115 ausgewertet werden. Zum anderen ist es möglich den Beladungszustand ausgehend von verschiedenen Temperatur- und/oder verschiedenen Druckwerten zu ermitteln. Desweiteren können noch weiter Größen zur Berechnung oder Simulation des Beladungszustands herangezogen werden. Eine entsprechende Vorgehensweise ist bspw. aus der DE 199 06 287 bekannt.

Erkennt die Abgasnachbehandlungssteuereinheit, dass der Partikelfilter einen bestimmten Beladungszustand erreicht hat, so wird die Regeneration initialisiert. Zur Regeneration des Partikelfilters stehen verschiedene Möglichkeiten zur Verfügung. So kann zum einen vorgesehen sein, dass bestimmte Stoffe über das Stellelement 182 dem Abgas zugeführt werden, die dann eine entsprechende Reaktion im Abgasnachbehandlungssystem 115 hervorrufen. Diese zusätzlich zugemessenen Stoffe bewirken unter anderem eine Temperaturerhöhung und/oder eine Oxidation der Partikel im Partikelfilter. So kann bspw. vorgesehen sein, dass mittels des Stellelements 182 Kraftstoffstoff und/oder Oxidationsmittel zugeführt werden.

Bei einer Ausgestaltung kann vorgesehen sein, dass ein entsprechendes Signal an die Motorsteuereinheit 175 übermittelt wird und diese eine so genannte Nacheinspritzung durchführt. Mittels der Nacheinspritzung ist es möglich, gezielt Kohlenwasserstoffe in das Abgas einzubringen, die über eine Temperaturerhöhung zur Regeneration des Abgasnachbehandlungssystems 115 beitragen.

Üblicherweise ist vorgesehen, dass der Beladungszustand ausgehend von verschiedenen Größen bestimmt wird. Durch Vergleich mit einem Schwellwert werden die unterschiedlichen Zustände erkannt und abhängig vom erkannten Beladungszustand die Regeneration eingeleitet.

Bei einer bevorzugten Ausführungsform ist vorgesehen, dass der Sensor 191 vor dem Partikelfilter als erster Temperatursensor und der Sensor 192 nach dem Partikelfilter als zweiter Temperatursensor 192 ausgebildet ist.

Bei einer weiteren bevorzugten Ausführungsform ist vorgesehen, dass der Sensor 191 vor dem Partikelfilter als erster Lambdasensor und der Sensor 192 nach dem Partikelfilter als zweiter Lambdasensor 192 ausgebildet ist. Die beiden Lambdasensoren liefern Signale, die die Sauerstoffkonzentration im Abgas charakterisieren.

Bei einer Ausgestaltung ist vorgesehen, dass lediglich ein Lambdasensor, der nach dem Partikelfilter angeordnet ist, verwendet wird. Die Sauerstoffkonzentration vor dem Partikelfilter wird ausgehend von verschiedenen Betriebskenngrößen berechnet oder aus einem Kennfeld ausgelesen. Desweiteren ist es möglich, ausgehend von der Sauerstoffkonzentration vor der Regeneration auf die Sauerstoffkonzentration vor dem Partikelfilter zu ermitteln.

In Figur 2 ist die erfindungsgemäße Vorgehensweise zur Erkennung eines Defekts im Bereich des Abgasnachbehandlungssystems anhand eines Flußdiagramms dargestellt. In einem ersten Betriebszustand, der dem Normalbetrieb der Brennkraftmaschine entspricht, werden die entstehenden Partikel in dem Partikelfilter abgelagert. Die abgelagerte Menge der Partikel wird in einem ersten Schritt 200 bestimmt. Diese Menge an abgelagerten Partikeln wird im folgenden auch als erste Größe SIMP bezeichnet. Diese erste Größe SIMP charakterisiert die Menge an Stoffen, die dem Abgasnachbehandlungssystem zugeführt werden. Beispielsweise kann vorgesehen sein, dass der Beladungszustand des Partikelfilters als erste Größe verwendet wird, oder dass ausgehend von dem Beladungszustand die erste Größe bestimmt wird.

Eine sich anschließende Abfrage 210 überprüft, ob ein zweiter Betriebszustand vorliegt. Liegt ein solcher zweiter Betriebszustand nicht vor, so erfolgt erneut Schritt 200, in dem die erste Größe bestimmt wird. Erkennt die Abfrage 210, dass ein zweiter Betriebszustand vorliegt, so folgt Schritt 220.

In dem zweiten Betriebszustand erfolgt die Regeneration des Partikelfilters, dies bedeutet, die in dem Filter abgelagerten Partikel werden oxidiert bzw. verbrannt. Hierbei wird der Sauerstoffgehalt des Abgases reduziert und die Temperatur des Abgases erhöht. Ausgehend von einer dieser beiden Größen läßt sich eine zweite Größe SIMR bestimmten, die die Menge an Stoffen charakterisiert, die dem Abgasnachbehandlungssystem entnommen werden,

Dies bedeutet, in Schritt 220 wird ausgehend von der Differenz der Temperaturwerte vor und nach dem Partikelfilter die frei gewordene Wärmemenge berechnet. Bei der Berechnung der Wärmemenge ausgehend von der Temperaturdifferenz wird bei einer besonders vorteilhaften Ausführungsform die Wärmekapazität des Partikelfilters und/oder der Wärmeaustausch, insbesondere die Energieabgabe an die Umgebung, berücksichtigt. Insbesondere die Wärmekapazität des Partikelfilters führt zu dynamischen Effekten, die zu berücksichtigen sind.

Ausgehend von verschiedenen Größen, insbesondere des spezifischen Heizwertes der Partikel, wird ausgehend von der Wärmemenge, die bei der Regeneration verbrannte bzw. aus dem Filter entfernte Partikelmenge bestimmt.

Bei einer Ausgestaltung der Vorgehensweise wird die verbrannte Partikelmenge im Schritt 220 ausgehend von einer Größe bestimmt, die die Sauerstoffkonzentration im Abgas charakterisiert. Vorzugsweise erfolgt diese Berechnung ausgehend von der Abnahme der Sauerstoffkonzentration im Partikelfilter. Ausgehend von der Abnahme der Sauerstoffkonzentration wird die umgesetzte Sauerstoffmenge und aus dieser die verbrannte Partikelmenge bestimmt.

Nach Abschluß der Regeneration überprüft die Abfrage 230, ob die Größen SIMR und SIMP nahezu gleich sind. Dies bedeutet die Abfrage.230 überprüft, ob die erste Größe und die zweite Größe wesentlich voneinander abweichen. Dies ist der Fall, wenn der Betrag der Differenz der Größen SIMR und SIMP größer als ein Schwellenwert ist. Dieser Schwellenwert ist durch die Ungenauigkeit der Ermittlung der Größen SIMR und SIMP bestimmt. Sind die beiden Größen nahezu gleich, so folgt erneut Schritt 200. Weichen die Werte wesentlich voneinander ab, so wird in Schritt 240 auf Fehler erkannt. Auf Fehler im Bereich des Partikelfilters wird erkannt, wenn die zugeführte Partikelmenge wesentlich von der verbrannten Partikelmenge abweicht.

## Patentansprüche

1. Verfahren zur Fehlererkennung eines Abgasnachbehandlungssystems (115), insbesondere bei einer Brennkraftmaschine (100), wobei in einem ersten Betriebszustand, ausgehend von ersten Betriebskenngrößen eine erste Größe (SIMP), die eine Menge an Stoffen charakterisiert, die dem Abgasnachbehandlungssystem (115) zugeführt werden, ermittelt wird, **dadurch gekennzeichnet, dass** in einem zweiten Betriebszustand, ausgehend von zweiten Betriebskenngrößen eine zweite Größe (SIMR), die die Menge an Stoffen charakterisiert, die aus dem Abgasnachbehandlungssystem (115) entfernt werden, ermittelt wird, und dass die erste und die zweite Größe (SIMP, SIMR) zur Fehlererkennung des Abgasnachbehandlungssystems (115) verglichen werden.

2. Verfahren nach Anspruch 1, **dadurch gekennzeichnet, dass** ein Fehler erkannt wird, wenn die beiden Größen (SIMP, SIMR) wesentlich voneinander abweichen.

3. Verfahren nach Anspruch 1 oder 2, **dadurch gekennzeichnet, dass** es sich bei der ersten Größe um die in einem Partikelfilter abgelagerten Partikelmenge handelt.

4. Verfahren nach einem der vorhergehenden Ansprüche, **dadurch gekennzeichnet, dass** es sich bei der zweiten Größe um die bei Regeneration des Partikelfilter beseitigten Partikelmenge handelt.

5. Verfahren nach einem der vorhergehenden Ansprüche, **dadurch gekennzeichnet, dass** zur Ermittlung der zweiten Größe eine Abgastemperatur und/oder eine Größe, die die Sauerstoffmenge im Abgas charakterisiert, verwendet wird.

6. Vorrichtung zur Fehlererkennung eines Abgasnachbehandlungssystems (115), insbesondere bei einer Brennkraftmaschine (100), bei der in einem ersten Betriebszustand, ausgehend von ersten Betriebskenngrößen eine erste Größe (SIMP), die die Menge an Stoffen charakterisiert, die dem Abgasnachbehandlungssystem (115) zugeführt werden, ermittelt wird, **dadurch gekennzeichnet, dass** Mittel (172) vorgesehen sind, die in einem zweiten Betriebszustand, ausgehend von zweiten Betriebskenngrößen eine zweite Größe (SIMR), die die Menge an Stoffen charakterisiert, die aus dem Abgasnachbehandlungssystem (115) entfernt werden, ermitteln und die die erste und die zweite Größe (SIMP, SIMR) zur Fehlererkennung des Abgasnachbehandlungssystems (115) vergleichen.

## Claims

1. Method for fault detection in an exhaust-gas aftertreatment system (115), in particular used in an internal combustion engine (100), in which method, in a first operating state, a first variable (SIMP), which characterizes a quantity of substances which are fed to the exhaust-gas aftertreatment system (115), is determined on the basis of first operating characteristic variables, **characterized in that**, in a second operating state, a second variable (SIMR) which characterizes the quantity of substances which are removed from the exhaust-gas aftertreatment system (115), is determined on the basis of second operating characteristic variables, and **in that** the first and second variables (SIMP, SIMR) are compared for fault detection in the exhaust-gas aftertreatment system (115).

2. Method according to Claim 1, **characterized in that** a fault is detected if the two variables (SIMP, SIMR) differ significantly from one another.

3. Method according to Claim 1 or 2, **characterized in that** the first variable is the quantity of particulates which have accumulated in a particulate filter.

4. Method according to one of the preceding claims, **characterized in that** the second variable is the quantity of particulates eliminated during regeneration of the particulate filter.

5. Method according to one of the preceding claims, **characterized in that** an exhaust-gas temperature and/or a variable which characterizes the quantity of oxygen in the exhaust gas is used to determine the second variable.

6. Apparatus for fault detection in an exhaust-gas aftertreatment system (115), in particular used in an internal combustion engine (100), in which apparatus, in a first operating state, a first variable (SIMP), which characterizes the quantity of substances which are fed to the exhaust-gas aftertreatment system (115), is determined on the basis of first operating characteristic variables, **characterized in that**, there are means (172) which, in a second operating state, determine a second variable (SIMR), which characterizes the quantity of substances which are removed from the exhaust-gas aftertreatment system (115), on the basis of second operating characteristic variables, and which compare the first and second variables (SIMP, SIMR) for fault detection in the exhaust-gas aftertreatment system (115).

## Revendications

1. Procédé de détection de défauts d'un système de post-traitement des gaz d'échappement (115), en particulier dans un moteur à combustion interne (100), dans lequel, dans un premier état de fonctionnement, on détermine sur la base de premières caractéristiques de fonctionnement une première grandeur (SIMP) qui caractérise une quantité de matières envoyée au système de post-traitement des gaz d'échappement (115),
**caractérisé en ce que**,
dans un second état de fonctionnement, on détermine sur la base de secondes caractéristiques de fonctionnement une seconde grandeur (SIMR) qui caractérise la quantité de matières éliminée du système de post-traitement des gaz d'échappement (115), et la première et la seconde grandeur (SIMP, SIMR) sont comparées pour la détection de défauts du système de post-traitement des gaz d'échappement (115).

2. Procédé selon la revendication 1,
**caractérisé en ce qu'**
un défaut est détecté lorsque les deux grandeurs (SIMP, SIMR) sont nettement différentes l'une de l'autre.

3. Procédé selon la revendication 1 ou 2,
**caractérisé en ce que**
la première grandeur est la quantité de particules déposées dans un filtre à particules.

4. Procédé selon une des revendications précédentes,
**caractérisé en ce que**
la seconde grandeur est la quantité de particules éliminée au cours de la régénération du filtre à particules.

5. Procédé selon une des revendications précédentes,
**caractérisé en ce que**
pour la détermination de la seconde grandeur, on utilise une température des gaz d'échappement et/ou une grandeur qui caractérise la quantité d'oxygène contenue dans les gaz d'échappement.

6. Dispositif de détection de défauts d'un système de post-traitement des gaz d'échappement (115), en particulier dans un moteur à combustion interne (100), dans lequel, dans un premier état de fonctionnement, on détermine sur la base de premières caractéristiques de fonctionnement une première grandeur (SIMP) qui caractérise la quantité de matières envoyée au système de post-traitement des gaz d'échappement (115),
**caractérisé en ce qu'**
il est prévu des moyens (172) qui, dans un second état de fonctionnement, déterminent sur la base de secondes caractéristiques de fonctionnement une seconde grandeur (SIMR) qui caractérise la quantité de matières éliminée du système de post-traitement des gaz d'échappement (115) et qui comparent la première et la seconde grandeur (SIMP, SIMR) pour effectuer la détection de défauts du système de post-traitement des gaz d'échappement (115).
